# EUROPÄISCHE PATENTSCHRIFT

(11) **EP 1 486 021 B1**
(45) Veröffentlichungstag und Bekanntmachung des Hinweises auf die Patenterteilung: **07.12.2005**
(21) Anmeldenummer: 03711845.2
(22) Anmeldetag: 12.03.2003
(51) Int. Cl.: H04J 14/02, H04Q 11/00, H04J 14/06

(54) **CROSS-CONNECTOR FÜR OPTISCHE SIGNALE**
CROSS CONNECTOR FOR OPTICAL SIGNALS
REPARTITEUR POUR SIGNAUX OPTIQUES

(30) Priorität: 21.03.2002 DE 10212649
(43) Veröffentlichungstag der Anmeldung: 15.12.2004
(73) Patentinhaber: SIEMENS AKTIENGESELLSCHAFT, 80333 München (DE)
(72) Erfinder: FISCHLER, Wolfgang, 81539 München (DE); HECKER, Nancy, 81543 München (DE); RICHTER, Alexander, 81475 München (DE); SCHAIRER, Wolfgang, 81827 München (DE)
(86) Internationale Anmeldenummer: PCT/DE2003/000795
(87) Internationale Veröffentlichungsnummer: WO 2003/081824

(56) Entgegenhaltungen:
- EP-A- 1 137 308
- EP-A- 1 162 855

## Beschreibung

Die Erfindung betrifft einen Cross-Connector nach dem Oberbegriff des Anspruches 1.

Bei WDM-Netzwerken wird es in der Zukunft volloptische auch photonische genannte, transparente Domänen geben. Zur Erhöhung der Übertragungskapazität der einzelnen Kanäle eines WDM- oder DWDM-Signals (dense wavelength division multiplexing) kann in einem solchen Netzwerk die Technik des Polarisationsmultiplex eingesetzt werden. Auf einer Wellenlänge eines Kanals können zwei unterschiedlich polarisierte optische Signale übertragen werden, deren Polarisationsrichtungen üblicherweise orthogonal sind. Zur Durchschaltung, Hinzufügung und/oder Ausspeisung von Kanälen in einem dem optischen Netzwerk angeschlossenen Netzelement werden derzeitig Add-Drop-Module oder optische Cross-Connectoren verwendet. Diese bekannten Netzelemente sind lediglich in der Lage, als kleinste Granularität unterschiedliche Wellenlängen selektiv zu schalten. Somit werden mit diesen Netzelementen bei optischen Netzwerken mit Polarisationsmultiplex immer zwei Signale geschaltet, die sich auf einer Wellenlänge befinden.

Aktuelle Add-Drop-Module können zusätzlich zur Granularität Wellenlängen auch die Granularität Wellenlängengruppen schalten. Dies bedeutet, dass z. B. aus dem optischen Netzwerk mehrere Kanäle mit eigenen Wellenlängen anstelle eines einzigen Kanals zusammengeschaltet werden. Die wellenlängenselektive Schaltung erfolgt in einer zusätzlichen Schaltvorrichtung, die an derjenigen für Wellenlängengruppenschaltung angeschlossen ist.

Die üblichen Cross-Connectoren weisen die selben Granularitäten Wellenlänge, Wellenlängengruppe wie die Add-Drop-Module und auch noch die Granularität Raumschaltfeld auf, die auf einer Schaltung aller oder mehrerer Kanäle oder eines Kanals eines WDM-Signals von einer Faser.des optischen Netzwerks auf eine andere Faser basiert.

Aus EP 1 162 855 A1 wird ein Cross-Connector mit einer ersten Schaltvorrichtung zur Raumschaltfeldschaltung (fiber routing switch FR) von Signalen beschrieben, deren Eingänge bzw. Ausgänge mit Ausgängen bzw. Eingängen einer zweiten Schaltvorrichtung zur Wellenlängenschaltung (wavelength routing switch WR) von Kanälen eines WDM-Signals verbunden sind. Dieser Cross-Connector eignet sich jedoch nicht für eine Schaltung polarisierter Signalkomponente eines polarisationsmultiplexierten Signals.

Aus EP 1 137 308 A2 ist ein Polarisationsmultiplex-Schalter bekannt, an dessen Eingang ein Kanal mit zwei orthogonalen Polarisationszuständen eingespeist ist. Ein geregelter Polarisationssteller regelt die zwei Polarisationszustände des Kanals, so dass zwei Signale mit orthogonalen Polarisationsrichtungen durch einen Polarisationsstrahlteiler getrennt werden. Die Regelung des Polarisationsstellers dient zur Optimierung der Abbildung der beiden Polarisationsrichtungen des vom Polarisationssteller ausgehenden Signals auf den Trennkennlinien des Polarisationsstrahlteilers. Dieser Polarisation-Demultiplexer bildet eine Drop-Schlatung eines der beiden orthogonalen linear polarisierten Signale. Das verbleibende zweite orthogonale linear polarisierte Signal wird weiterhin einen seiner Polarisationsrichtung angepassten Polarisationsstrahlkoppler passieren und wird dort mit einem neuen externen Signal zusammengefasst. Das neue externe Signal weist eine Polarisationsrichtung auf, die zur Polarisationsrichtung des Signals aus dem Polarisationsstrahlteiler orthogonal ist.
Es wird auch hier ein Schalter beschrieben, bei dem ein WDM-Signal in einen Wellenlängen-Demultiplexer zur Trennung seiner Kanäle eingespeist ist. Einige Kanäle werden in mehrere Add/Drop-Module und andere Kanäle werden in Polarisation-Schalter eingespeist. Bei einem dynamischen optischen Netzwerk mit variabler Anzahl von Kanälen und/oder mit variablen Übertragungseigenschaften der Kanäle wie Polarisations- und/oder Wellenlängen-Multiplex ist daher dieser Schalter nicht optimal geeignet, weil eine weitere Information jedes eingehenden neuen Kanals zur passenden Schaltung notwendig wäre.

Die Aufgabe der Erfindung besteht also darin, einen Cross-Connector anzugeben, bei dem beliebig mit oder ohne Polarisations-Multiplex übertragene Kanäle eines WDM-Signals geschaltet werden können. Außerdem sollte der Cross-Connector volloptisch transparent für ein optisches dynamisches Netzwerk geeignet sein, wobei eine Schaltung nach einer oder einigen bis allen Granularitäten Raumschaltfeld, Wellenlängengruppe, Wellenlänge und Polarisation möglich sein soll.

Erfindungsgemäß wird diese Aufgabe durch einen Cross-Connector gelöst, der durch die Merkmale des Anspruchs 1 gekennzeichnet ist.
Zweckmäßige Weiterbildungen der Erfindung werden in den abhängigen Ansprüchen beschrieben.

Ausgehend von einem optischen Cross-Connector mit einer ersten Schaltvorrichtung zum Durchschalten, Abzweigen oder/und Einspeisen von optischen Signalen in einem optischen Netzwerk ist erfindungsgemäß vorgesehen, dass eine zweite Schaltvorrichtung für Polarisationsmultiplex-Signale der ersten Schaltvorrichtung angeordnet ist, deren Eingänge und Ausgänge Ausgängen bzw. Eingängen der ersten Schaltvorrichtung verbunden sind und dass die zweite Schaltvorrichtung wenigstens einen Polarisationsdemultiplexer und wenigstens einen Polarisationsmultiplexer mit externen Anschlüssen aufweist.

Die Granularität der ersten Schaltvorrichtung basiert auf Raumschaltfeld oder/und Wellenlängengruppe oder/und Wellenlänge durch kaskadierten Anschluss von Schaltmodulen, die wenigstens eine dieser Granularitäten aufweisen.

Mit großem Vorteil wird ein optisches Signal wie z. B ein WDM-Signal transparent von einem Schaltmodul zu einem weiteren Schaltmodul geführt und kann nach einer beliebigen Granularität geschaltet werden. Nach Durchlauf eines oder mehrerer oder aller Schaltmodule wird ein Kanal in die zweite Schaltvorrichtung oder sogenannten Polarisationsmultiplex-Schalter eingespeist und bei Anwendung von Polarisationsmultiplex in zwei orthogonal polarisierte Signale zerlegt, die z. B. an einem externen Terminal ausgegeben werden.

Wenn sich die Anzahl der Kanäle bzw. die Eigenschaften der Kanäle wie Wellenlängen- und/oder Polarisationmultiplex wie bei dynamischen Netzwerken ändern, weist der erfindungsgemäße Cross-Connector eine hohe Flexibilität durch seine Schaltungsuniversalität sowie einen geringen Aufwand des Netzwerkmanagements für die Kanalschaltungen auf.

Der Cross-Connector weist außerdem eine bidirektionale und transparente Übertragung bzw. Schaltung durch seine Aufbausymmetrie auf. Auch bei anderen Signalen als Polarisationsmultiplex-Signalen ist die Schaltungsanordnung verwendbar.

Ausführungsbeispiele der Erfindung werden anhand der Zeichnung näher beschrieben. Dabei zeigen:
Fig. 1: einen erfindungsgemäßen Cross-Connector mit wenigstens zwei Granularitäten,
Fig. 2: einen erfindungsgemäßen Cross-Connector mit zwei Granularitäten,
Fig. 3: einen erfindungsgemäßen Cross-Connector mit drei Granularitäten,
Fig. 4: einen erfindungsgemäßen Cross-Connector mit vier Granularitäten,
Fig. 5: eine Tabelle mit Anordnung der Granularitäten nach Anzahl der verwendeten Schaltmodule,
Fig. 6: einen erfindungsgemäßen Polarisationsmultiplex-Schalter.

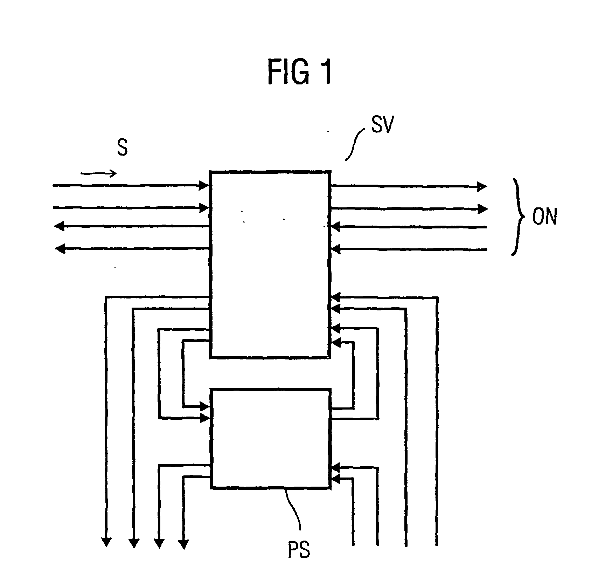

Fig. 1 zeigt schematisch einen erfindungsgemäßen Cross-Connector mit wenigstens zwei Granularitäten, die durch eine erste Schaltvorrichtung SV und durch einen Polarisationsmultiplex-Schalter als zweite Schaltvorrichtung PS definiert sind. Ein oder mehrere optische Signale S werden über ein optisches Netzwerk ON unidirektional oder bidirektional übertragen, dessen optische Fasern an die ersten Schaltvorrichtung SV angeschlossen sind. Ein oder mehrere Ausgänge der ersten Schaltvorrichtung SV sind mit entsprechenden Eingängen der zweiten Schaltvorrichtung PS verbunden. Bei einem Polarisationsmultiplex-Signal am Eingang der zweiten Schaltvorrichtung PS ist es möglich, beide Signale des Polarisationsmultiplex-Signals auszukoppeln oder nur ein Signal des Polarisationsmultiplex-Signals auszukoppeln und das andere Signal zur ersten Schaltvorrichtung SV zurück durchzuschalten oder beide Signale des Polarisationsmultiplex-Signals zur ersten Schaltvorrichtung SV zurück durchzuschalten. Bei Signalen am Ausgang der ersten Schaltvorrichtung SV, die aus dem optischen Netzwerk ON abgezweigt wurden und keine Polarisationsmultiplex-Signale sind, ermöglicht die erste Schaltvorrichtung SV eine Drop-Schaltung nach außen gemäß ihrer Granularität. Als Granularität für die erste Schaltvorrichtung SV ist die Wellenlänge, eine Gruppe von Wellenlängen oder ein Raumschaltfeld zwischen den unterschiedlichen Fasern des optischen Netzwerk ON vorgesehen. Die erste Schaltvorrichtung SV kann ein oder mehrere kaskadiert angeordnete Schaltmodule mit unterschiedlichen Granularitäten zur Durchschaltung, Abzweigung oder/und Einspeisung von Kanalsignalen aus den optischen Signalen S aufweisen. Die Reihenfolge der Granularitäten ist so gewählt, dass die Übertragung oder die Schaltung der optischen Signale S in die kaskadierten Schaltmodule transparent und mit einer Schalthierarchie Raumfeld-Wellenlängengruppe-Einzelwellenlänge bis zur zweiten Schaltvorrichtung PS abläuft.

Weitere Add-Schaltungen sind auch an beiden Schaltvorrichtungen SV, PS vorgesehen, die Kanalsignale z. B. aus einem externen Terminal in das optische Netzwerk ON zu ihrer Übertragung einspeisen können.

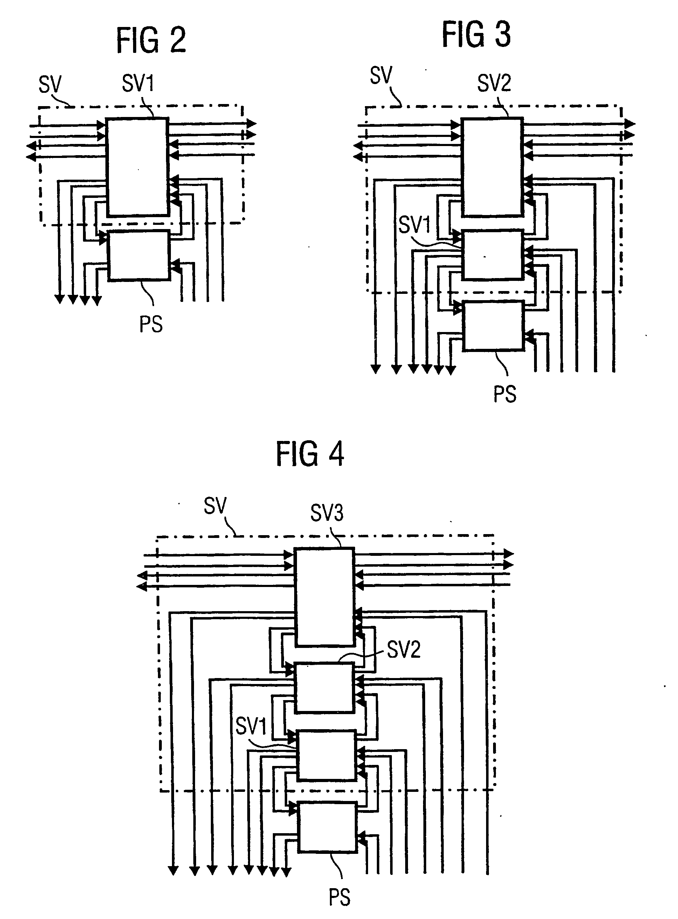

Fig. 2 zeigt einen erfindungsgemäßen Cross-Connector mit zwei Granularitäten gemäß Fig. 1, die durch eine erste Schaltvorrichtungen SV mit einem ersten Schaltmodul SV1 und durch einen Polarisation-Schalter als zweite Schaltvorrichtung PS definiert sind. Das Schaltmodul SV1 weist eine Granularität auf, die eine Raumschaltfeld-, eine Wellenlängengruppen- oder eine Wellenlängenschaltung erzeugt.
Zur Trennung oder Zusammenfassung von Kanalsignalen der optischen Signale S sind bei Bedarf z. B. für WDM-Signale Demultiplexer bzw. Multiplexer in einer der beiden oder zwischen den beiden Schaltelementen SV1, PS angeordnet.

Fig. 3 zeigt einen erfindungsgemäßen Cross-Connector mit drei Granularitäten gemäß Fig. 1 oder 2, wobei dem Schaltmodul SV1 und dem optischen Netzwerk ON ein zweites Schaltmodul SV2 mit einer weiteren Granularität als der Granularität des Schaltmoduls SV1 zwischengeschaltet ist. Drei verschiedene Varianten von Granularitätenkombinationen der kaskadierten Schaltmodule SV1, SV2 sind möglich:
- Das erste Schaltmodul SV1 weist eine Wellenlängengruppen-Granularität auf und das zweite Schaltmodul SV2 eine Raumschaltfeld-Granularität.
- Das erste Schaltmodul SV1 weist eine Wellenlängen-Granularität auf und das zweite Schaltmodul SV2 eine Raumschaltfeld-Granularität.
- Das erste Schaltmodul SV1 weist eine Wellenlängen-Granularität auf und das zweite Schaltmodul SV2 eine Wellenlängengruppen-Granularität.

Die letzte Variante für die Kaskadierung der Schaltmodule SV1, SV2 ist aus dem Stand der Technik als optisches Add-Drop-Modul "OADM" bei WDM-Übertragungssystemen bekannt. Durch die erfindungsgemäße Zusammenschaltung mit der zweiten Schalvorrichtung PS als Polarisationsmultiplex-Schalter ist auch die Granularität Polarisation vorhanden.

Auch hier sind Demultiplexer und Multiplexer beim Bedarf für die Trennung der optischen Signale S in Kanalsignale oder für die Zusammenfassung der Kanalsignale in ein oder mehrere optische Signale S zwischen oder in den Schaltelementen SV1, SV2, PS angeordnet.

Fig. 4 zeigt einen erfindungsgemäßen Cross-Connector mit vier Granularitäten gemäß Fig. 1 bis 3, wobei die erste Schaltvorrichtung SV drei kaskadierte Schaltmodule SV1, SV2, SV3 mit den jeweiligen Granularitäten Raumschaltfeld, Wellenlängengruppe und Wellenlänge aufweist. Die erste Schaltvorrichtung SV ist auch aus dem Stand der Technik als optischer Cross-Connector "OXC" bekannt. Durch die erfindungsgemäße Zusammenschaltung mit der zweiten Schalvorrichtung PS als Polarisationsmultiplex-Schalter ist auch die Granularität Polarisation vorhanden.

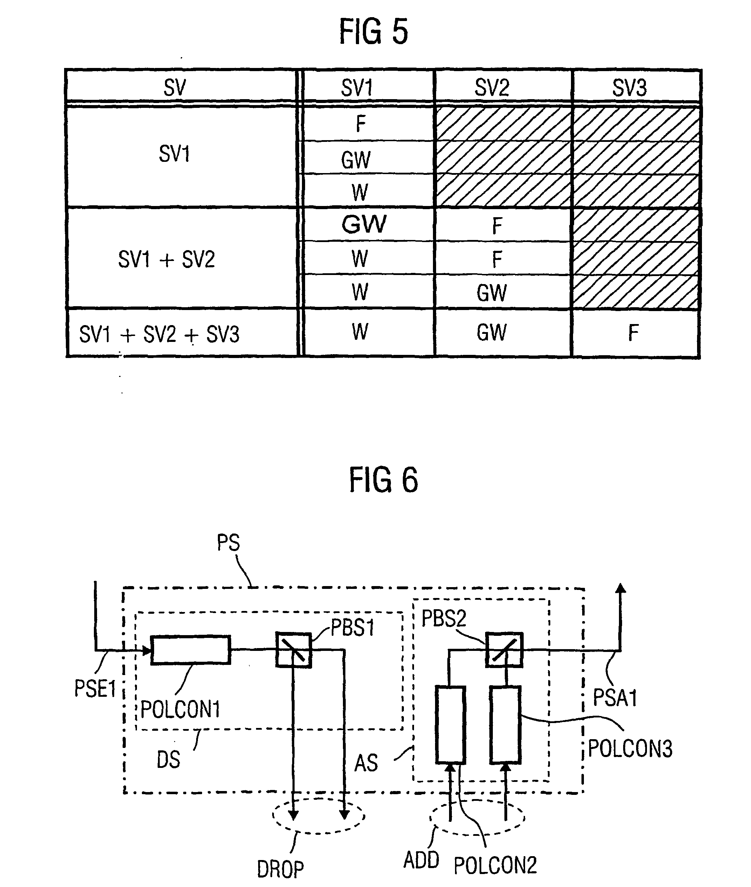

In Fig. 5 ist eine Tabelle mit Anordnung der Granularitäten nach Anzahl der verwendeten Schaltmodulen SV1, SV2, SV3 in der ersten Schaltvorrichtung SV gemäß Fig. 1 bis 4 dargestellt. Die unterschiedlichen Schaltmöglichkeiten sind als Schaltung W von einzelnen Kanalsignalen oder als Schaltung GW von Gruppen von Kanalsignalen oder als Schaltung F der optischen Signale S zwischen unterschiedlichen Fasern des optischen Netzwerks ON gekennzeichnet. Es ist hier angenommen, dass die zweite Schaltvorrichtung PS als Polarisationsmultiplex-Schalter dem ersten Schaltmodul SV1 nachgeschaltet ist. Die Kennzeichnungen SV1, SV1+SV2 und SV1+SV2+SV3 entsprechen den unterschiedlichen Kaskadierungen der Schaltmodule SV1, SV2, SV3 gemäß Fig. 2 bis 4.

Fig. 6 zeigt einen erfindungsgemäßen Polarisationsmultiplex-Schalter, der als zweite Schaltvorrichtung PS gemäß Fig. 1 bis 4 verwendet ist.

Ein zwei Datenkanäle aufweisendes Polarisationsmultiplex-Signal aus der ersten Schaltvorrichtung SV bzw. aus einem Demultiplexer wird über einen Eingang PSE1 in einen Polarisationsdemultiplexer DS mit einem Polarisationssteller POLCON1 eingespeist. Der Polarisationssteller POLCON1 richtet das eingehende Polarisationsmultiplex-Signal so aus, dass die Polarisationsrichtungen der beiden Datenkanäle an die Trennkennlinien eines nachgeordneten Polarisationsstrahlteilers PBS1 zu ihrer Trennung angepasst sind. Die vom Polarisationsstrahlteiler PBS1 ausgehenden Signale bilden die Drop-Signale am Ausgang DROP des Polarisationsmultiplex-Schalters PS. Unter Umständen, z.B. falls die Übertragungsstrecke PDLbehaftet ist, sind zwei Polarisationssteller und zwei Polarisations-Strahlteiler bzw. -Filter notwendig, um die beiden Polarisationssignale trennen zu können.

An weiteren Eingängen ADD des Polarisationsmultiplex-Schalters PS werden zwei Signalkanäle z.B. aus einem externen Terminal in einen Polarisationsmultiplexer AS eingespeist. Der Polarisationsmultiplexer AS weist zwei Polarisationssteller POLCON2, POLCON3 auf, in die je eines der zwei Kanalsignale eingespeist und mit orthogonalen Polarisationseinstellungen ausgegeben wird. Die Polarisationseinstellungen sind so definiert, dass die zwei Kanalsignale in einem nachgeordneten Polarisationskoppler PBS2 zu einem Polarisationsmultiplex-Signal zusammengefasst werden, das einem Ausgang PSA1 des Polarisationsmultiplers AS oder des Polarisationsmultiplex-Schalters PS zugeführt wird. Anschließend kann das erzeugte Polarisationsmultiplex-Signal der ersten Schaltvorrichtung SV abgegeben und durch die Schaltmodule SV1, SV2, SV3 weiter übertragen werden.
Grundsätzlich können auch alle andere Polarisationsmultiplex-Schalter aus dem Stand der Technik als zweite Schaltvorrichtung PS verwendet werden.

Für eine bidirektionale Polarisationsschaltung eines Kanalsignals werden zwei Polarisationsmultiplex-Schalter gemäß Fig. 6 in der zweiten Schaltvorrichtung PS angeordnet, die jeweils unidirektional vorgesehen sind.

Falls die Übertragungsstrecke mit PDL (Polarisation Dependent Loss) behaftet ist oder andere Merkmale vorliegen, die die Orthogonalität der beiden Polarisationsmultiplex-Signale aufheben können, weist der Polarisationsdemultiplexer DS zwei Polarisationssteller und zwei Polarisations-Strahlteiler auf, bei denen nur jeweils ein Ausgang verwendet wird. Eine Alternative ist auch der Einsatz zweier Polarisationsfilter anstelle der Polarisations-Strahlteiler. Ein vorgeschalteter 3 dB-Koppler oder eine andere geeignete optische Komponente zur Signalaufteilung teilt das Polarisationsmultiplex-Signal auf die beiden Polarisationssteller auf.

Als optische Signale S können Signale mit beliebigen Granularitäten insbesondere mit dem Cross-Connector gemäß Fig. 4 geschaltet werden. Auch Signale oder Kanalsignale, die nicht als Polarisationsmultiplex-Signale vorgesehen sind oder unpolarisiert sind, können durch die erste Schaltvorrichtung SV transparent geschaltet werden. Dies liegt an der Kaskadierung der Schaltelemente PS, SV1, SV2, SV3, die zu einer hohen Schaltungsuniversalität des erfindungsgemäßen Cross-Connectors führt.

Ein Netzwerkmanagement steuert die passende Schaltung des erfindungsgemäßen Cross-Connectors je nach erforderlicher und möglicher Granularität jedes optischen Signals.

## Patentansprüche

1. Optischer Cross-Connector mit einer ersten Schaltvorrichtung (SV) zum Durchschalten, Abzweigen oder/und Einspeisen von optischen Signalen (S) in einem optischen Netzwerk (ON), der eine zweite Schaltvorrichtung (PS) für Polarisationsmultiplex-Signale angeordnet ist, die wenigstens einen Polarisationsdemultiplexer (DS) und wenigstens einen Polarisationsmultiplexer (AS) aufweist, deren Eingänge bzw. Ausgänge mit Ausgängen bzw. Eingängen der ersten Schaltvorrichtung (SV) verbunden sind und bei der die Ausgänge des Polarisationsdemultiplexers (DS) bzw. die Eingänge des Polarisationsmultiplexers (AS) mit externen Anschlüssen gekoppelt sind, **dadurch gekennzeichnet, dass** zusätzlich zu den Anschlüssen zur Verbindung mit dem optischen Netzwerk (ON) und mit der zweiten Schaltvorrichtung (PS) die erste Schaltvorrichtung (SV) weitere Eingangs- und Ausgangsanschlüsse aufweist.

2. Optischer Cross-Connector nach Anspruch 1,
**dadurch gekennzeichnet,**
**dass** die optischen Signale (S) als WDM-Signale vorgesehen sind, deren Kanalsignale unterschiedliche Wellenlängen und/oder unterschiedliche Polarisationseinstellungen als Polarisationsmultiplex-Signale aufweisen.

3. Optischer Cross-Connector nach Anspruch 2,
**dadurch gekennzeichnet,**
**dass** Wellenlängen-Demultiplexer und Wellenlängen-Multiplexer in einer der beiden oder zwischen den beiden Schaltvorrichtungen (SV, PS) zur Trennung von Kanalsignalen bzw. zur Zusammenfassung von Kanalsignalen angeordnet sind.

4. Optischer Cross-Connector nach Anspruch 1, 2 oder 3,
**dadurch gekennzeichnet,**
**dass** die erste Schaltvorrichtung (SV) ein erstes Schaltmodul (SV1)
zur Schaltung (W) von einzelnen Kanalsignalen oder
zur Schaltung von Gruppen (GW) von Kanalsignalen oder
zur Schaltung (F) der optischen Signale (S) zwischen unterschiedlichen Fasern des optischen Netzwerks (ON) aufweist, und dass jeweils Eingänge an Ausgänge der zweiten Schaltvorrichtung (PS) und des ersten Schaltmoduls (SV1) angeschlossen sind.

5. Optischer Cross-Connector nach Anspruch 1, 2 oder 3,
**dadurch gekennzeichnet,**
**dass** die erste Schaltvorrichtung (SV) ein erstes und ein zweites Schaltmodul (SV1, SV2) aufweist,
**dass** das erste und zweite Schaltmodul (SV1, SV2) so ausgelegt sind, dass jeweils
eine erste Schaltung (W) von einzelnen Kanalsignalen und eine zweite Schaltung (GW) von Gruppen von Kanalsignalen der optischen Signale (S) oder
eine erste Schaltung (GW) von Gruppen von Kanalsignalen der optischen Signale (S) und eine zweite Schaltung (F) der optischen Signale (S) zwischen unterschiedlichen Fasern des optischen Netzwerks (ON) oder
eine erste Schaltung (W) von einzelnen Kanalsignalen und eine zweite Schaltung (F) der optischen Signale (S) zwischen unterschiedlichen Fasern des optischen Netzwerks (ON) bewirken,
und **dass** jeweils Eingänge an Ausgänge der zweiten Schaltvorrichtung (PS) und des ersten Schaltmoduls (SV1) angeschlossen sind und
**dass** jeweils weitere Eingänge an weitere Ausgänge des ersten Schaltmoduls (SV1) und des zweiten Schaltmoduls (SV2) angeschlossen sind.

6. Optischer Cross-Connector nach Anspruch 1, 2 oder 3,
**dadurch gekennzeichnet,**
**dass** die Schaltvorrichtung (SV) ein erstes Schaltmodul (SV1) zur Schaltung (W) von einzelnen Kanalsignalen, ein zweites Schaltmodul (SV2) zur Schaltung (GW) von Gruppen von Kanalsignalen der optischen Signale (S) und ein drittes Schaltmodul (SV3) zur Schaltung (F) der optischen Signale (S) zwischen unterschiedlichen Fasern des optischen Netzwerks (ON) aufweist und
**dass** jeweils Eingänge an Ausgänge der zweiten Schaltvorrichtung (PS) und des ersten Schaltmoduls (SV1) angeschlossen sind und
**dass** jeweils weitere Eingänge an weitere Ausgänge des ersten Schaltmoduls (SV1) und des zweiten Schaltmoduls (SV2) angeschlossen sind und
**dass** jeweils weitere Eingänge an weitere Ausgänge des zweiten Schaltmoduls (SV2) und des dritten Schaltmoduls (SV3) angeschlossen sind.

7. Optischer Cross-Connector nach einem der vorhergehenden Ansprüche,
**dadurch gekennzeichnet,**
**dass** die jeweiligen Schaltmodule (SV, SV1, SV2, SV3) zusätzlich zu den Anschlüssen zur Verbindung mit dem optischen Netzwerk (ON) und mit der zweiten Schaltvorrichtung (PS) weitere Eingangs- und Ausgangsanschlüsse aufweisen.

8. Optischer Cross-Connector nach einem der vorhergehenden Ansprüche,
**dadurch gekennzeichnet,**
**dass** der Polarisationsdemultiplexer (DS) und der Polarisationsmultiplexer (AS) als eine Drop-Schaltung bzw. eine Add-Schaltung von wenigstens einem Kanalsignal vorgesehen sind, die jeweils wenigstens einen Polarisationssteller (POLCON1, POLCON2, POLCON3) und einen oder zwei Polarisationsstrahlteiler (PBS1) bzw. einen Polarisationskoppler (PBS2) aufweisen.

9. Optischer Cross-Connector nach einem der vorhergehenden Ansprüche,
**dadurch gekennzeichnet,**
**dass** am Eingang (PSE1) des Polarisationsdemultiplexers (DS) ein Polarisationsmultiplex-Signal in einen Polarisationssteller (POLCON1) zur Abbildung seiner polarisierten Signalkomponente in zwei unterschiedlich polarisierte Signalkanäle eingespeist ist, die nach Durchgang durch einen Polarisationsstrahlteiler (PBS1) Ausgänge (DROP) der zweiten Schaltvorrichtung (PS) bilden.

10. Optischer Cross-Connector nach einem der vorhergehenden Ansprüche,
**dadurch gekennzeichnet,**
**dass** am Eingang (PSE1) des Polarisationsdemultiplexers (DS) ein Polarisationsmultiplex-Signal in zwei Polarisationssteller mit einem vorgeschalteten 3dB-Koppler oder einer anderen geeigneten optischen Komponente zur Signalaufteilung eingespeist ist, um die beiden unterschiedlich polarisierten Signalkomponente des Polarisationsmultiplexsignals jeweils auf die Trennkennlinie eines Polarisationsstrahlteilers oder Polarisationsfilters abzubilden, deren Ausgänge Ausgänge (DROP) der zweiten Schaltvorrichtung (PS) bilden.

11. Optischer Cross-Connector nach einem der vorhergehenden Ansprüche,
**dadurch gekennzeichnet,**
**dass** am Eingang (ADD) des Polarisationsmultiplexers (AS) zwei beliebig polarisierte Signalkanäle mit gleichen Wellenlängen jeweils in einen Polarisationssteller (POLCON2, POLCON3) zur Abbildung ihrer Polarisation in zwei unterschiedlich polarisierte Signalkomponenten eingespeist sind, die weiterhin nach Durchgang durch einen Polarisationskoppler (PBS2) ein Polarisationsmultiplex-Signal an einem Ausgang (PSA1) der zweiten Schaltvorrichtung (PS) bilden.

12. Optischer Cross-Connector nach einem der vorhergehenden Ansprüche 8-11,
**dadurch gekennzeichnet,**
**dass** die Polarisationssteller (POLCON1, POLCON2, POLCON3) wenigstens eine lineare Polarisationsrichtung an ihrem Ausgang aufweisen, die auf eine der Polarisationskennlinien des nachgeordneten Polarisationsstrahlteilers (PBS1) bzw. -kopplers (PBS2) abgebildet ist.

13. Optischer Cross-Connector nach einem der vorhergehenden Ansprüche,
**dadurch gekennzeichnet,**
**dass** wenigstens ein der optischen Signale (S) ein Polarisationsmultiplex-Signal aufweist.

14. Optischer Cross-Connector nach einem der vorhergehenden Ansprüche,
**dadurch gekennzeichnet,**
**dass** die optischen Signale (S) bidirektional durchgeschaltet, abgezweigt oder/und eingespeist sind.

15. Optischer Cross-Connector nach einem der vorhergehenden Ansprüche,
**dadurch gekennzeichnet,**
**dass** wenigstens ein optisches Signal (S) über das optische Netzwerk (ON) und die Schaltelemente (PS, SV) bidirektional übertragbar ist.

## Claims

1. Optical cross connector with a first switching device (SV) for switching through, dropping and/or adding optical signals (S) in an optical network (ON),
in which a second switching device (PS) for polarisation multiplex signals is arranged, having at least one polarisation demultiplexer (DS) and at least one polarisation multiplexer (AS), the inputs and outputs of which are connected to outputs and inputs of the first switching device (SV) and in which the outputs of the polarisation demultiplexer (DS) and the inputs of the polarisation multiplexer (AS) are coupled to external connections,
**characterised in that**
in addition to the connections for connecting to the optical network (ON) and the second switching device (PS), the first switching device (SV) has further input and output connections.

2. Optical cross connector according to claim 1, **characterised in that** the optical signals (S) are provided as WDM signals, the channel signals of which have different wavelengths and/or different polarisation settings from polarisation multiplex signals.

3. Optical cross connector according to claim 2, **characterised in that** wavelength demultiplexers and wavelength multiplexers are arranged in one of the two or between the two switching devices (SV, PS) to split channel signals or to combine channel signals.

4. Optical cross connector according to claim 1, 2 or 3, **characterised in that** the first switching device (SV) has a first switching module (SV1) to switch (W) individual channel signals or to switch groups (GW) of channel signals or to switch (F) optical signals (S) between different fibres in the optical network (ON) and that inputs are connected respectively to outputs of the second switching device (PS) and the first switching module (SV1).

5. Optical cross connector according to claim 1, 2 or 3, **characterised in that** the first switching device (SV) has a first and a second switching module (SV1, SV2),
the first and second switching modules (SV1, SV2) are designed such they respectively bring about
a first switching (W) of individual channel signals and a second switching (GW) of groups of channel signals of the optical signals (S) or
a first switching (GW) of groups of channel signals of the optical signals (S) and a second switching (F) of optical signals (S) between different fibres of the optical network (ON) or
a first switching (W) of individual channel signals and a second switching (F) of optical signals between different fibres of the optical network (ON)
and that inputs are connected respectively to outputs of the second switching device (PS) and the first switching module (SV1) and
further inputs are connected respectively to further outputs of the first switching module (SV1) and the second switching module (SV2).

6. Optical cross connector according to claim 1, 2 or 3,
**characterised in that**
the switching device (SV) has a first switching module (SV1) to switch (W) individual channel signals, a second switching module (SV2) to switch (GW) groups of channel signals of the optical signals (S) and a third switching module (SV3) to switch (F) optical signals (S) between different fibres of the optical network (ON) and
inputs are connected respectively to outputs of the second switching device (PS) and the first switching module (SV1) and
further inputs are connected respectively to further outputs of the first switching module (SV1) and the second switching module (SV2) and
further inputs are connected respectively to further outputs of the second switching module (SV2) and the third switching module (SV3).

7. Optical cross connector according to one of the preceding claims,
**characterised in that**
the respective switching modules (SV, SV1, SV2, SV3) have further input and output connections in addition to the connections for connecting to the optical network (ON) and the second switching device (PS).

8. Optical cross connector according to one of the preceding claims,
**characterised in that** the polarisation demultiplexer (DS) and the polarisation multiplexer (AS) are provided as a drop switch or add switch for at least one channel signal, having respectively at least one polarisation controller (POLCON1, POLCON2, POLCON3) and one or two polarisation beam splitters (PBS1) or a polarisation coupler (PBS2).

9. Optical cross connector according to one of the preceding claims,
**characterised in that**
at the input (PSE1) of the polarisation demultiplexer (DS) a polarisation multiplex signal is fed into a polarisation controller (POLCON1) to map its polarised signal components into two signal channels with different polarisations, which, after passing through a polarisation beam splitter (PBS1) form outputs (DROP) of the second switching device (PS).

10. Optical cross connector according to one of the preceding claims,
**characterised in that**
at the input (PSE1) of the polarisation demultiplexer (DS) a polarisation multiplex signal is fed into two polarisation controllers with an upstream 3db coupler or another suitable optical component for splitting the signal, to map the two differently polarised signal components of the polarisation multiplex signal respectively onto the splitting characteristics of a polarisation beam splitter or polarisation filter, the outputs of which form outputs (DROP) of the second switching device (PS).

11. Optical cross connector according to one of the preceding claims,
**characterised in that** at the input (ADD) of the polarisation multiplexer (AS) two signal channels with any polarisation but the same wavelength are fed respectively into a polarisation controller (POLCON2, POLCON3) to map their polarisation into two differently polarised signal components, which after passing through a polarisation coupler (PBS2) form a polarisation multiplex signal at one output (PSA1) of the second switching device (PS).

12. Optical cross connector according to one of the preceding claims 8-11,
**characterised in that**
the polarisation controllers (POLCON1, POLCON2, POLCON3) have at least one linear polarisation direction at their output, which is mapped onto one of the polarisation characteristics of the subsequent polarisation beam splitter (PBS1) or coupler (PBS2).

13. Optical cross connector according to one of the preceding claims,
**characterised in**
**that** at least one of the optical signals (S) has a polarisation multiplex signal.

14. Optical cross connector according to one of the preceding claims,
**characterised in that**
the optical signals (S) are switched through, dropped and/or fed in bidirectionally.

15. Optical cross connector according to one of the preceding claims,
**characterised in that**
at least one optical signal (S) can be transmitted bidirectionally via the optical network (ON) and the switching elements (PS, SV).

## Revendications

1. Connecteur optique croisé comprenant un premier dispositif de commutation (SV) pour la commutation, la dérivation et/ou l'alimentation de signaux optiques (S) dans un réseau optique (ON),
auquel dispositif de commutation (SV) est aménagé un second dispositif de commutation (PS) pour des signaux à multiplexage en polarisation, lequel second dispositif comprend au moins un démultiplexeur en polarisation (DS) et au moins un multiplexeur en polarisation (AS) dont les entrées resp. sorties sont reliées à des sorties resp. entrées du premier dispositif de commutation (SV) et dans lequel les sorties du démultiplexeur en polarisation (DS) resp. les entrées du multiplexeur en polarisation (AS) sont couplées à des connexions extérieures,
**caractérisé en ce que** le premier dispositif de commutation (SV) est pourvu, en plus des connexions pour la liaison avec le réseau optique (ON) et avec le second dispositif de commutation (PS), de connexions d'entrée et de sortie supplémentaires.

2. Connecteur optique croisé selon la revendication 1,
**caractérisé en ce que** les signaux optiques (S) sont prévus en tant que signaux WDM dont les signaux de canal présentent, en tant que signaux à multiplexage en polarisation, des longueurs d'onde différentes et/ou des réglages de polarisation différents.

3. Connecteur optique croisé selon la revendication 2,
**caractérisé en ce que** des démultiplexeurs en longueur d'onde et des multiplexeurs en longueur d'onde sont disposés dans un des deux ou entre les deux dispositifs de commutation (SV, PS) pour la séparation de signaux de canal resp. pour la réunion de signaux de canal.

4. Connecteur optique croisé selon la revendication 1, 2 ou 3,
**caractérisé en ce que** le premier dispositif de commutation (SV) comprend un premier module de commutation (SV1) pour la commutation (W) de signaux de canal individuels ou pour la commutation de groupes (GW) de signaux de canal ou pour la commutation (F) des signaux optiques (S) entre différentes fibres du réseau optique (ON)
et **en ce que** des entrées sont connectées à chaque fois à des sorties du second dispositif de commutation (PS) et du premier module de commutation (SV1).

5. Connecteur optique croisé selon la revendication 1, 2 ou 3,
**caractérisé en ce que** le premier dispositif de commutation (SV) comprend un premier et un second modules de commutation (SV1, SV2),
**en ce que** le premier et le second modules de commutation (SV1, SV2) sont conçus de manière à réaliser à chaque fois une première commutation (W) de signaux de canal individuels et
une seconde commutation (GW) de groupes de signaux de canal des signaux optiques (S) ou
une première commutation (GW) de groupes de signaux de canal des signaux optiques (S) et une seconde commutation (F) des signaux optiques (S) entre différentes fibres du réseau optique (ON) ou
une première commutation (W) de signaux de canal individuels et une seconde commutation (F) des signaux optiques (S) entre différentes fibres du réseau optique (ON),
et **en ce que** des entrées sont connectées à chaque fois à des sorties du second dispositif de commutation (PS) et du premier module de commutation (SV1) et
**en ce que** des entrées supplémentaires sont connectées à chaque fois à des sorties supplémentaires du premier module de commutation (SV1) et du second module de commutation (SV2).

6. Connecteur optique croisé selon la revendication 1, 2 ou 3,
**caractérisé en ce que** le dispositif de commutation (SV) comprend un premier module de commutation (SV1) pour la commutation (W) de signaux de canal individuels, un deuxième module de commutation (SV2) pour la commutation (GW) de groupes de signaux de canal des signaux optiques (S) et un troisième module de commutation (SV3) pour la commutation (F) des signaux optiques (S) entre différentes fibres du réseau optique (ON) et
**en ce que** des entrées sont connectées à chaque fois à des sorties du second dispositif de commutation (PS) et du premier module de commutation (SV1) et
**en ce que** des entrées supplémentaires sont connectées à chaque fois à des sorties supplémentaires du premier module de commutation (SV1) et du second module de commutation (SV2) et
**en ce que** des entrées supplémentaires sont connectées à chaque fois à des sorties supplémentaires du deuxième module de commutation (SV2) et du troisième module de commutation (SV3).

7. Connecteur optique croisé selon l'une des revendications précédentes,
**caractérisé en ce que** les modules de commutation respectifs (SV, SV1, SV2, SV3) sont pourvus de connexions d'entrée et de sortie supplémentaires en plus des connexions pour la liaison avec le réseau optique (ON) et avec le second dispositif de commutation (PS).

8. Connecteur optique croisé selon l'une des revendications précédentes,
**caractérisé en ce que** le démultiplexeur en polarisation (DS) et le multiplexeur en polarisation (AS) sont prévus en tant que circuit d'extraction resp. circuit d'insertion d'au moins un signal de canal comprenant à chaque fois au moins un contrôleur de polarisation (POLCON1, POLCON2, POLCON3) et un ou deux séparateur(s) de faisceaux par polarisation (PBS1) resp. un coupleur par polarisation (PBS2).

9. Connecteur optique croisé selon l'une des revendications précédentes,
**caractérisé en ce qu'**un signal à multiplexage en polarisation est alimenté dans un contrôleur de polarisation (POLCON1), au niveau de l'entrée (PSE1) du démultiplexeur en polarisation (DS), pour représenter sa composante de signal polarisée sous forme de deux canaux de signal de polarisation différente qui, après être passés à travers un séparateur de faisceaux par polarisation (PBS1), forment des sorties (DROP) du second dispositif de commutation (PS).

10. Connecteur optique croisé selon l'une des revendications précédentes,
**caractérisé en ce qu'**un signal à multiplexage en polarisation est alimenté, au niveau de l'entrée (PSE1) du démultiplexeur en polarisation (DS), dans deux contrôleurs de polarisation pourvus d'un coupleur 3dB monté en amont ou d'un autre composant optique approprié pour la répartition des signaux pour représenter les deux composantes de signal de polarisation différente du signal à multiplexage en polarisation à chaque fois sur la courbe caractéristique de séparation d'un séparateur de faisceaux par polarisation ou filtre de polarisation dont les sorties forment des sorties (DROP) du second dispositif de commutation (PS).

11. Connecteur optique croisé selon l'une des revendications précédentes,
**caractérisé en ce que** deux canaux de signal de polarisation quelconque ayant les mêmes longueurs d'onde sont alimentés à chaque fois, au niveau de l'entrée (ADD) du multiplexeur en polarisation (AS), dans un contrôleur de polarisation (POLCON2, POLCON3) pour représenter leur polarisation sous forme de deux composantes de signal de polarisation différente qui forment en outre, après leur passage à travers un coupleur par polarisation (PBS2), un signal à multiplexage en polarisation au niveau d'une sortie (PSA1) du second dispositif de commutation (PS).

12. Connecteur optique croisé selon l'une des revendications précédentes 8-11,
**caractérisé en ce que** les contrôleurs de polarisation (POLCON1, POLCON2, POLCON3) présentent à leur sortie au moins une direction de polarisation qui est représentée sur une des courbes caractéristiques de polarisation du séparateur (PBS1) resp. coupleur (PBS2) de faisceaux par polarisation monté en aval.

13. Connecteur optique croisé selon l'une des revendications précédentes,
**caractérisé en ce qu'**au moins un des signaux optiques (S) comprend un signal à multiplexage en polarisation.

14. Connecteur optique croisé selon l'une des revendications précédentes,
**caractérisé en ce que** les signaux optiques (S) sont commutés, dérivés et/ou alimentés de manière bidirectionnelle.

15. Connecteur optique croisé selon l'une des revendications précédentes,
**caractérisé en ce qu'**au moins un signal optique (S) peut être transmis de manière bidirectionnelle par le biais du réseau optique (ON) et des éléments de commutation (PS, SV).
